# FASCICULE DE BREVET EUROPEEN

(11) **EP 2 729 982 B1**
(45) Date de publication et mention de la délivrance du brevet: **11.10.2017**
(21) Numéro de dépôt: 12733707.9
(22) Date de dépôt: 09.07.2012
(51) Int. Cl.: H01M 8/0254, H01M 8/0297, H01M 8/0228, H01M 8/241, H01M 8/1018, H01M 8/124

(54) **PLAQUE DE PILE A COMBUSTIBLE ET PILE A COMBUSTIBLE**
BRENNSTOFFZELLENPLATTE UND BRENNSTOFFZELLE
FUEL CELL PLATE AND FUEL CELL

(30) Priorité: 08.07.2011 FR 1156248
(43) Date de publication de la demande: 14.05.2014
(73) Titulaire: Areva Stockage d'Energie, 13547 Aix-en-Provence (FR)
(72) Inventeur: BEILLE, Florent, 13510 Eguilles (FR); QUINTIERI, Christian, 13100 Aix en Provence (FR); VANNUCCI, Didier, 13600 La Ciotat (FR); LE FOL, Frédéric, 13124 Peypin (FR)
(74) Mandataire: Lavoix
(86) Numéro de dépôt international: PCT/EP2012/063411
(87) Numéro de publication internationale: WO 2013/007692

(56) Documents cités:
- EP-A1- 1 686 641
- FR-A1- 2 899 386
- US-A1- 2002 086 196
- US-A1- 2006 246 340
- US-A1- 2009 325 036

## Description

La présente invention concerne le domaine des piles à combustible et plus spécifiquement la réalisation de l'étanchéité entre des composants empilés d'une pile à combustible.

Une pile à combustible à membrane échangeuse d'ions comprend un empilement de cellules électrochimiques élémentaires. Chaque cellule électrochimique comprend un ensemble membrane-électrode (« EME ») pris en sandwich entre deux plaques séparatrices.

L'ensemble membrane-électrode est stratifié et comprend une membrane échangeuse d'ions prise en sandwich entre deux électrodes. Chaque électrode comprend une couche active adjacente à la membrane et une couche de diffusion de gaz. Une électrode forme anode et l'autre forme cathode.

Chaque plaque séparatrice comprend des gorges ménagées dans sa face en contact avec l'ensemble membrane-électrode de façon à définir entre la plaque séparatrice et l'ensemble membrane-électrode des conduits de circulation d'un gaz réactif en contact avec l'ensemble membrane-électrode. Une étanchéité est réalisée entre les plaques séparatrices et l'ensemble membrane-électrode pour assurer l'étanchéité des conduits de circulation des gaz réactifs.

En option, chaque plaque séparatrice est formée de l'empilement de deux plaques élémentaires définissant entre elles des conduits de circulation d'un fluide de refroidissement. Dans ce cas, une étanchéité est réalisée entre les deux plaques élémentaires pour assurer l'étanchéité des conduits de circulations du fluide de refroidissement.

FR 2 899 386 divulgue une cellule électrochimique dans laquelle l'étanchéité entre un ensemble membrane-électrode et des plaques séparatrices est réalisée par des joints rapportés sur des entretoises de séparation.

FR 2 887 687 divulgue une cellule électrochimique dans laquelle l'étanchéité entre un ensemble membrane-électrode et une plaque séparatrice est réalisée par un joint sérigraphié.

US 2009/0325036 divulgue une cellule électrochimique dans laquelle l'étanchéité entre deux plaques élémentaires formant une plaque séparatrice est obtenue du fait du soudage des plaques élémentaires.

EP 1 686 641 divulgue une pile à combustible comprenant une plaque séparatrice comprenant une portion ondulée dont un sommet est prévu pour un contact étanche avec une membrane ou une électrode.

Un but de l'invention est de proposer une plaque de pile à combustible permettant de réaliser une étanchéité fiable tout en étant obtenue de manière simple et économique.

A cet effet, l'invention propose une plaque pour pile à combustible formée d'un empilement de plaques et d'ensembles membrane-électrode, caractérisée en ce qu'elle comprend au moins une portée d'étanchéité striée pour un appui étanche contre un ensemble membrane-électrode ou une autre plaque de pile à combustible.

Une portée d'étanchéité striée présente des stries ou sillons parallèles séparés par des lignes saillantes.

Selon d'autres modes de mise en oeuvre, la plaque de pile à combustible comprend une ou plusieurs des caractéristiques suivantes, prise(s) isolément ou selon toutes les combinaisons techniquement possibles :
- elle forme une plaque élémentaire prévue pour être empilée avec une autre plaque élémentaire pour former une plaque séparatrice de pile à combustible, et comprend au moins une portée d'étanchéité striée pour un appui étanche contre ladite autre plaque élémentaire ;
- elle comprend un film de renfort déposé sur la portée d'étanchéité striée ;
- elle forme une plaque séparatrice de pile à combustible prévue pour définir avec au moins un ensemble membrane-électrode des canaux de circulation de fluides entre la plaque séparatrice et l'ensemble membrane-électrode ;
- elle comprend, sur une ou chaque face, au moins une portée d'étanchéité striée pour un appui étanche avec un ensemble membrane-électrode ;
- elle est une plaque bipolaire ou monopolaire ;
- elle est formée de deux plaques élémentaires empilées et en appui étanche l'une contre l'autre par au moins une paire de portées d'étanchéité en vis-à-vis chacune formée sur une plaque élémentaire respective, au moins une portée d'étanchéité étant striée ; et
- elle comprend au moins une paire de portées d'étanchéité dont les deux portées d'étanchéité sont striées ;
- elle comprend un film de renfort interposé entre deux portées d'étanchéité d'une paire de portées d'étanchéité ;

L'invention concerne également un pile à combustible comprenant un empilement de plaques et d'ensembles membrane-électrode, chaque ensemble membrane-électrode étant disposé entre deux plaques définissant avec l'ensemble membrane-électrode des canaux de circulation d'un fluide entre chacune des deux plaque et l'ensemble membrane-électrode, chaque plaque comprenant sur au moins une de ses faces une portée d'étanchéité pour un appui étanche contre l'ensemble membrane-électrode ou une autre plaque, caractérisée en ce qu'au moins une plaque comprend une portée d'étanchéité striée.

Selon d'autres modes de mise en oeuvre, la pile à combustible comprend une ou plusieurs des caractéristiques suivantes, prise(s) isolément ou selon toutes les combinaisons techniquement possibles :
- elle comprend une plaque comprenant au moins une portée d'étanchéité striée pour un appui étanche contre un ensemble membrane-électrode et un film de renfort entre la portée d'étanchéité striée et l'ensemble membrane-électrode ;
- le film de renfort est interposé entre la portée d'étanchéité striée et l'ensemble membrane-électrode ou déposé sur la portée d'étanchéité striée et l'ensemble membrane-électrode ;
- elle comprend une plaque séparatrice formée d'au moins deux plaques élémentaires empilées en appui étanche l'une contre l'autre par au moins deux portées d'étanchéités en vis-à-vis, au moins une desdites portées d'étanchéité étant striée ; et
- elle comprend un film de renfort interposé entre les deux portées d'étanchéité en vis-à-vis des deux plaques élémentaires de la plaque séparatrice.

L'invention et ses avantages seront mieux compris à la lecture de la description qui va suivre, donnée uniquement à titre d'exemple, et faite en référence aux dessins annexés, sur lesquels :
- la Figure 1 est une vue schématique en coupe d'une pile à combustible, conforme à l'invention ;
- la Figure 2 est une vue agrandie de la zone Il sur la Figure 1 ;
- la Figure 3 est une vue analogue à celle de la Figure 2 illustrant une variante de réalisation ;
- la Figure 4 est une vue agrandie de la zone IV sur la Figure 1 ; et
- les Figures 5 et 6 sont des vues analogues à celle de la Figure 4 illustrant des variantes de réalisation.

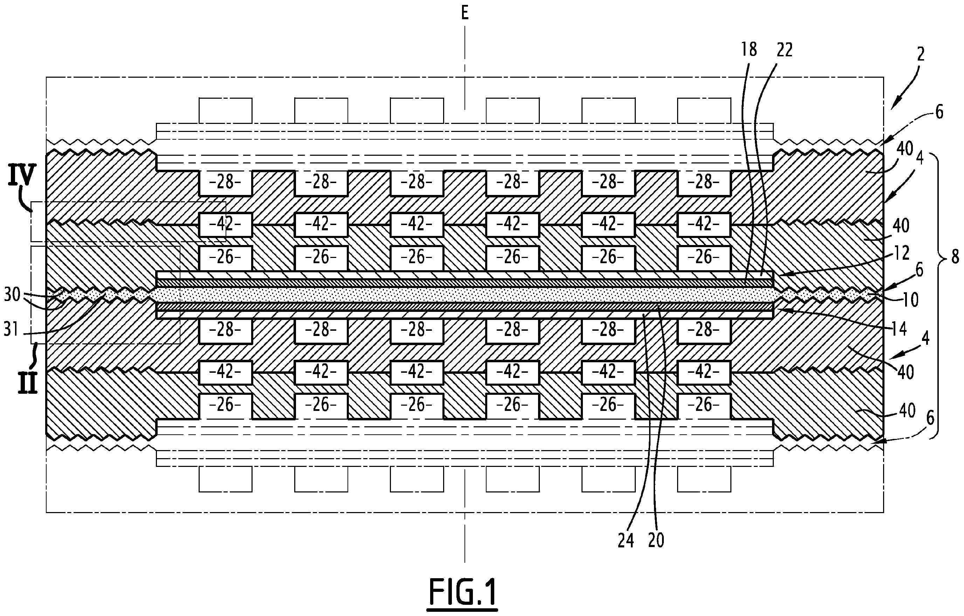

En référence à la Figure 1, la pile à combustible 2 comprend un empilement de plaques séparatrices 4 et d'ensembles membrane-électrode 6 (EME) en alternance. Un tel empilement est couramment désigné par le terme anglais « stack ».

De manière connue en soit, l'empilement est maintenu en compression suivant la direction d'empilement E. Le maintien en compression permet d'assurer l'étanchéité entre les plaques séparatrices 4 et les ensembles membrane-électrode 6, et de maintenir les ensembles membrane-électrode 6 en compression entre les plaques séparatrices 4.

Chaque ensemble membrane-électrode 6 est pris en sandwich entre deux plaques séparatrices 4. Chaque ensemble formé de deux plaques séparatrices 4 disposées de part et d'autre d'un ensemble membrane-électrode 6 définit une cellule électrochimique 8 élémentaire de la pile à combustible 2.

Une seule cellule électrochimique 8 est illustrée complètement sur la Figure 1. Une pile à combustible comprend en pratique une ou plusieurs cellules électrochimiques 8

Chaque ensemble membrane-électrode 6 comprend en superposition une membrane 10 échangeuse d'ions prise en sandwich entre deux électrodes 12, 14 disposées de part et d'autre de la membrane 10. Une électrode 12 définit une anode et l'autre électrode 14 définit une cathode.

La membrane 10 est notamment une membrane échangeuse de protons, et la pile à combustible du type PEM (« Proton Exchange Membrane »).

Chaque électrode est conductrice électriquement. Chaque électrode 12, 14 est bicouche et comprend une couche active, respectivement 18, 20, et une couche de diffusion de gaz respectivement 22, 24.

Les plaques séparatrices 4 assurent la fonction de conduction électrique. Les plaques séparatrices 4 sont électriquement conductrices et en contact électrique avec les électrodes 12.

Les plaques séparatrices 4 assurent la fonction de distribution de gaz réactifs de part et d'autre de l'ensemble membrane-électrode 6 et d'évacuation des produits résultant.

Les plaques séparatrices 4 illustrées sur la figure 1 sont « bipolaires » : chaque plaque séparatrice 4 est disposée entre deux ensembles membrane-électrode 6 et en contact par chacune de ses faces opposées avec un ensemble membrane-électrode 6 respectif. Une plaque séparatrice est dite « monopolaire » lorsqu'elle possède une seule face en contact avec un ensemble membrane-électrode. De telles plaques séparatrices monopolaires (non visibles) se retrouvent aux extrémités de l'empilement de la pile à combustible 2.

Chaque plaque séparatrice 4 est en contact par une de ses faces avec une électrode 12 formant anode d'un ensemble membrane-électrode 6 et en contact par l'autre de ses faces avec une électrode 14 formant cathode de l'autre ensemble membrane-électrode 6.

Chaque plaque séparatrice 4 comprend un ensemble de gorges ménagées sur chacune de ses faces en contact avec un ensemble membrane électrode 6 pour entre la plaque séparatrice 4 et cet ensemble membrane-électrode 6 des conduits d'alimentation 26, 28 pour la circulation de gaz réactifs le long d'une face de l'ensemble membrane-électrode 6, en contact avec une électrode 12, 14 de l'ensemble membrane-électrode 6.

De manière connue en soi, les conduits d'alimentation 26 anodique des différentes cellules électrochimiques 8 d'une pile à combustible 2 sont reliés fluidiquement entre eux pour l'alimentation en combustible et l'évacuation des fluides produits. Les conduits d'alimentation 28 cathodiques des différentes cellules électrochimiques 8 d'une pile à combustible 2 sont reliés fluidiquement entre eux pour l'alimentation en comburant et l'évacuation des fluides produits.

Les conduits d'alimentation 26 anodique sont alimentés en combustible, par exemple de l'hydrogène, sont alimentés en comburant, par exemple de l'oxygène ou de l'air.

En fonctionnement, les conduits d'alimentation 26 anodique définis les longs des électrodes 12 formant anode sont alimentés en combustible, par exemple de l'hydrogène, et les conduits d'alimentation 28 cathodiques définis les long des électrodes 14 formant cathode sont alimentées en comburant, par exemple l'oxygène ou de l'air. Dans chaque cellule électrochimique 8, l'hydrogène subit au contact de l'électrode 12 formant anode une oxydation catalytique libérant des protons et des électrons.

Les électrons circulent dans un circuit électrique externe. Les protons traversent l'ensemble membrane-électrode 6 et se recombinent avec l'oxygène et les électrons fournis par l'électrode 14 formant cathode en produisant de l'eau dans le compartiment cathodique. Une différence de potentiel électrique apparaît entre les plaques séparatrices 4 de part et d'autre de chaque ensemble membrane-électrode 6. L'empilement de cellules électrochimiques 8 permet d'adapter les valeurs de tension et de courant souhaitée.

Afin d'assurer l'étanchéité des conduits d'alimentation 26, 28 vis-à-vis de l'extérieur, chaque plaque séparatrice 4 est en appui étanche contre un ensemble membrane-électrode 6 par l'intermédiaire de portées d'étanchéité 30 plaque/EME.

La membrane 10 de chaque ensemble membrane-électrode 6 présente une région marginale 31 dégagée non recouverte par les électrodes 12, 14 et chaque plaque séparatrice 4 est en appui étanche contre la région marginale 31 de la membrane 10.

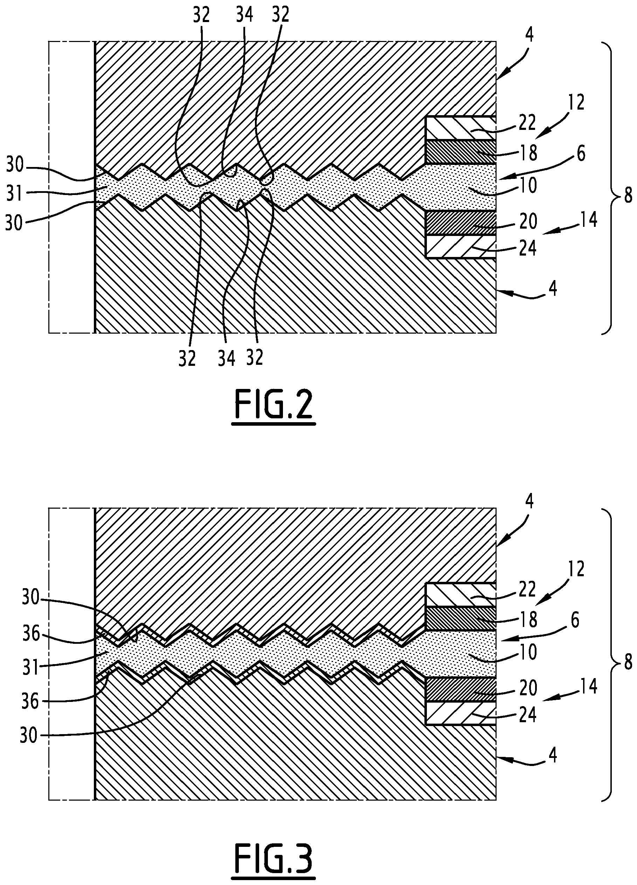

Tel que représenté sur la Figure 2, les portées d'étanchéité 30 sont striées. Chaque portée d'étanchéité 30 présente ainsi des lignes saillantes 32 définissant entre elles des sillons ou stries 34 parallèles. La région marginale 31 de la membrane 10 est pincée entre les portées d'étanchéité 30 striées en regard de deux plaques séparatrice 4.

Sous l'effet du maintien en compression de l'empilement de la pile à combustible 2, les lignes saillantes 32 des portées d'étanchéité 30 striées pénètrent dans la membrane 10. Il en résulte que les portées d'étanchéité 30 assurent une étanchée suffisante entre chaque plaque séparatrice 4 et la membrane 10, sans qu'il soit nécessaire de prévoir des moyens d'étanchéité supplémentaires.

Dans une variante illustrée sur la Figure 3, un film de renfort 36 est disposé entre chaque portée d'étanchéité 30 striée et la membrane 10.

Le film de renfort 36 est destiné à éviter une détérioration des lignes saillantes 32 et/ou de la membrane 10.

Le film de renfort 36 est un film souple propre à se conformer aux lignes saillantes 32, séparé de la plaque séparatrice 4 et de la membrane 10 et disposé entre la portée d'étanchéité 30 striée et la membrane 10 lors de la mise en place de l'empilement. En variante, le film de renfort 36 est réalisé par dépôt sur la portée d'étanchéité 30 ou la membrane 10.

Le film de renfort 36 est par exemple réalisé en polytétrafluoroéthylène (PTFE).

Avantageusement, les plaques séparatrices 4 assurent la fonction de refroidissement de la pile à combustible.

A cet effet, comme représentées sur la Figure 1, chaque plaque séparatrice 4 est réalisée sous la forme d'une « biplaque » : elle est formée de l'empilement de deux plaques élémentaires 40.

Chaque ensemble membrane-électrode 6 est pris en sandwich entre deux plaques élémentaires 40 de deux plaques séparatrices 4 différentes. Chaque plaque élémentaire 40 est empilée avec un ensemble membrane-électrode 6 en définissant avec celui-ci des canaux de circulation 26 anodiques ou des canaux de circulation 28 cathodique.

Les plaques élémentaires 40 sont électriquement conductrices. Les plaques élémentaires 40 associées formant une plaque séparatrice 4 sont liées électriquement entre elles.

Les plaques élémentaires 40 sont configurées pour définir entre elles des conduits de refroidissement 42 internes à la plaque séparatrice 4 pour la circulation d'un fluide de refroidissement.

Afin d'assurer l'étanchéité des conduits de refroidissement 42 vis-à-vis de l'extérieur, les plaques élémentaires 40 sont en appui l'une contre l'autre par l'intermédiaire de portées d'étanchéité 44 plaque/plaque.

Les portées d'étanchéité 44 sont agencées par paire, chaque paire comprenant deux portées d'étanchéité 44 en vis-à-vis chacune formée sur une plaque élémentaire 40 respective.

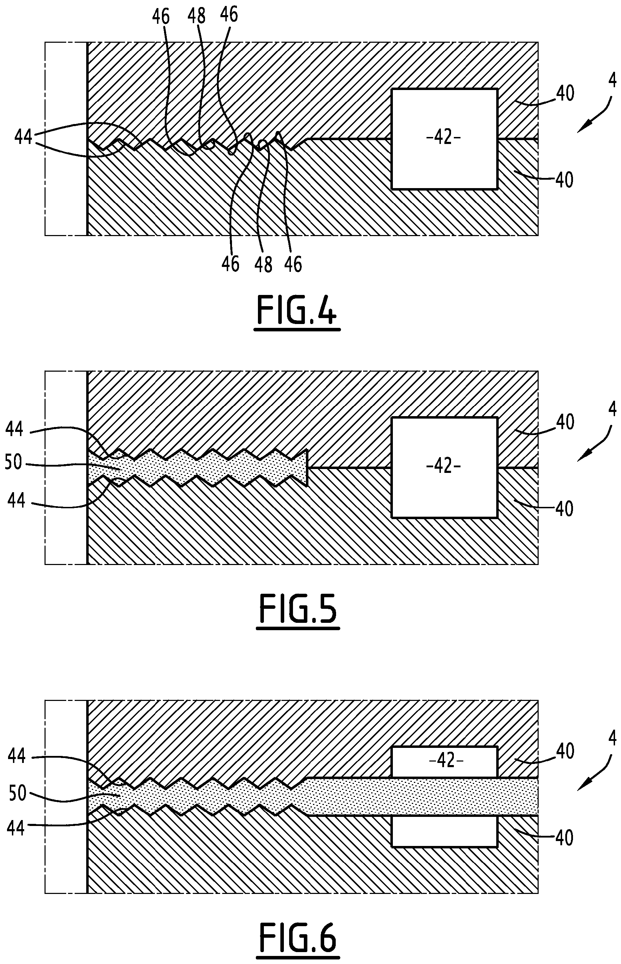

Comme représentées sur la Figure 4, chaque plaque élémentaire 40 porte sur sa face tournée vers la plaque élémentaire 40 associée des portées d'étanchéité 44 plaque/plaque. Chaque porte d'étanchéité 44 plaque/plaque est striée et comprend des lignes saillantes 46 parallèles définissant entre elles des sillons ou stries 48.

Sous l'effet du maintien en compression de l'empilement de la pile à combustible 2, les portées d'étanchéité 44 d'une même paire s'interpénètrent et assurent une étanchée suffisante entre les plaques élémentaires 40, sans qu'il soit nécessaire de prévoir des moyens d'étanchéité supplémentaires.

Tel que représentées sur la Figure 4, deux portées d'étanchéité 44 plaque/plaque en vis-à-vis de deux plaques élémentaires 40 sont chacune striées. En variante, une seule des deux portées d'étanchéité 44 est striée, et l'autre est lisse.

Les portées d'étanchéité 30 plaque/EME striées de chaque plaque séparatrice 4 sont formées sur les faces des plaques élémentaires 40 formant la plaque séparatrice 4 tournées vers l'extérieur de la plaque séparatrices, destinées à être tournées vers un ensemble membrane-électrode 6.

Comme représenté sur la Figure 5, dans une variante, un film de renfort 50 est interposé entre deux portées d'étanchéité 44 plaque/plaque en vis-à-vis. Le film de renfort 50 est séparé des plaques élémentaires 40 et interposées entre elles lors de l'empilement ou déposé sur l'une des plaques élémentaires.

Le film de renfort 50 s'étend exclusivement sur les portées d'étanchéités 44 et les plaques élémentaires 40 sont par ailleurs en contact direct ce qui assure leur liaison électrique. Le film de renfort 50 est réalisé dans un matériau électriquement conducteur ou isolant.

Comme représenté sur la Figure 6, dans une variante, le film de renfort 50 s'étend sur toute la surface des plaques élémentaires 40. Les plaques élémentaires 40 sont séparées par le film de renfort 50.

Dans ce cas, le film de renfort 50 est électriquement conducteur pour assurer le liaison électrique entre les plaques élémentaires 40.

Grâce à l'invention, il est possible de réaliser l'étanchéité entre les ensembles membrane-électrode et les plaques séparatrices et entre les plaques élémentaires d'une plaque séparatrice de manière simple et à coût faible.

Les portées d'étanchéité striées sont obtenues facilement, que cela soit sur des plaques métalliques usinées ou moulées ou des plaques en matériau composite comprenant une matrice renforcée de fibres, obtenues par exemples par moulage.

L'invention s'applique à la fabrication de piles à combustible à membrane échangeuse de protons (PEM) et plus généralement aux piles à combustible à membrane échangeuse d'ion. Elle s'applique notamment aussi aux piles à combustible à oxyde solide nommées SOFC (« Solid Oxyde Fuel Cell »).

## Revendications

1. Plaque (4 ; 40) pour pile à combustible formée d'un empilement de plaques (4 ; 40) et d'ensembles membrane-électrode (6), **caractérisée en ce qu'**elle comprend au moins une portée d'étanchéité (30, 44) striée pour un appui étanche contre un ensemble membrane-électrode (6) ou une autre plaque (40) de pile à combustible.

2. Plaque selon la revendication 1, formant une plaque élémentaire (40) prévue pour être empilée avec une autre plaque élémentaire (40) pour former une plaque séparatrice (4) de pile à combustible, la plaque élémentaire (40) comprenant au moins une portée d'étanchéité (44) striée pour un appui étanche contre ladite autre plaque élémentaire (40).

3. Plaque selon la revendication 2, comprenant un film de renfort déposé sur la portée d'étanchéité striée (44).

4. Plaque selon la revendication 1, formant une plaque séparatrice (4) de pile à combustible prévue pour définir avec au moins un ensemble membrane-électrode (6) des canaux de circulation de fluides entre la plaque séparatrice (4) et l'ensemble membrane-électrode (6).

5. Plaque selon la revendication 4, comprenant, sur une ou chaque face, au moins une portée d'étanchéité (30) striée pour un appui étanche avec un ensemble membrane-électrode (6).

6. Plaque selon la revendication 4 ou 5, bipolaire ou monopolaire.

7. Plaque selon l'une quelconque des revendications 4 à 6, formée de deux plaques élémentaires (40) empilées et en appui étanche l'une contre l'autre par au moins une paire de portées d'étanchéité (44) en vis-à-vis chacune formée sur une plaque élémentaire (40) respective, au moins une portée d'étanchéité (44) étant striée.

8. Plaque selon l'une quelconque des revendications 4 à 7, comprenant au moins une paire de portées d'étanchéité (44) dont les deux portées d'étanchéité (44) sont striées.

9. Plaque selon l'une des revendications 7 et 8, comprenant un film de renfort interposé entre deux portées d'étanchéité (44) d'une paire de portées d'étanchéité.

10. Pile à combustible (2) comprenant un empilement de plaques (4; 40) et d'ensembles membrane-électrode (6), chaque ensemble membrane-électrode (6) étant disposé entre deux plaques (4 ; 40) définissant avec l'ensemble membrane-électrode (6) des canaux de circulation d'un fluide entre chacune des deux plaque (4 ; 40) et l'ensemble membrane-électrode (6), chaque plaque (4 ; 40) comprenant sur au moins une de ses faces une portée d'étanchéité (30 ; 40) pour un appui étanche contre l'ensemble membrane-électrode (6) ou une autre plaque (40), **caractérisée en ce qu'**au moins une plaque (4, 40) comprend une portée d'étanchéité (30, 44) striée.

11. Pile à combustible selon la revendication 10, comprenant une plaque comprenant au moins une portée d'étanchéité (30) striée pour un appui étanche contre un ensemble membrane-électrode (6) et un film de renfort (36) entre la portée d'étanchéité (30) striée et l'ensemble membrane-électrode (6).

12. Pile à combustible selon la revendication 11, dans laquelle le film de renfort (36) est interposé entre la portée d'étanchéité (30) striée et l'ensemble membrane-électrode (6) ou déposé sur la portée d'étanchéité (30) striée et l'ensemble membrane-électrode (6).

13. Pile à combustible selon l'une quelconque des revendications 10 à 12, comprenant une plaque séparatrice (4) formée d'au moins deux plaques élémentaires (40) empilées en appui étanche l'une contre l'autre par au moins deux portées d'étanchéités (40) en vis-à-vis, au moins une desdites portées d'étanchéité (40) étant striée.

14. Pile à combustible selon la revendication 13, comprenant un film de renfort interposé entre les deux portées d'étanchéité (40) en vis-à-vis des deux plaques élémentaires (40) de la plaque séparatrice (6).

## Patentansprüche

1. Platte (4, 40) für eine Brennstoffzelle, die aus einem Stapel von Platten (4, 40) und Membran-Elektroden-Einheiten (6) gebildet ist, **dadurch gekennzeichnet, dass** sie mindestens eine gerippte Dichtfläche (30, 44) für ein dichtes Anliegen an einer Membran-Elektroden-Einheit (6) oder einer anderen Brennstoffzellenplatte (40) aufweist.

2. Platte gemäß Anspruch 1, die eine Elementarplatte (40) ausbildet, die vorgesehen ist, um mit einer anderen Elementarplatte (40) übereinandergestapelt zu sein, um eine Brennstoffzellen-Trennplatte (4) auszubilden, wobei die Elementarplatte mindestens eine gerippte Dichtfläche (44) für ein dichtes Anliegen an der anderen Elementarplatte (40) aufweist.

3. Platte gemäß Anspruch 2, aufweisend einen Verstärkungsfilm, der auf der gerippten Dichtfläche (44) abgelagert ist.

4. Platte gemäß Anspruch 1, die eine Brennstoffzellen-Trennplatte (4) ausbildet, die vorgesehen ist, um mit mindestens einer Membran-Elektroden-Einheit (6) Kanäle zum Zirkulieren von Fluiden zwischen der Trennplatte (4) und der Membran-Elektroden-Einheit (6) zu definieren.

5. Platte gemäß Anspruch 4, die auf einer oder jeder Seite mindestens eine gerippte Dichtfläche (30) für ein dichtes Anliegen an einer Membran-Elektroden-Einheit (6) aufweist.

6. Platte gemäß Anspruch 4 oder 5, die zweipolig oder einpolig ist.

7. Platte gemäß irgendeinem der Ansprüche 4 bis 6, die aus zwei Elementarplatten (40) gebildet ist, die übereinandergestapelt sind und durch mindestens ein Paar von gegenüberliegenden Dichtflächen (44) dicht aneinander anliegen, von denen jede auf einer jeweiligen Elementarplatte (40) ausgebildet ist, wobei mindestens eine Dichtfläche (44) gerippt ist.

8. Platte gemäß irgendeinem der Ansprüche 4 bis 7, aufweisend mindestens ein Paar von Dichtflächen (44), von dem die beiden Dichtflächen (44) gerippt sind.

9. Platte gemäß einem der Ansprüche 7 und 8, aufweisend einen Verstärkungsfilm, der zwischen zwei Dichtflächen (44) eines Paares von Dichtflächen angeordnet ist.

10. Brennstoffzelle (2), aufweisend einen Stapel von Platten (4, 40) und Membran-Elektroden-Einheiten (6), wobei jede Membran-Elektroden-Einheit (6) zwischen zwei Platten (4, 40) angeordnet ist, die mit der Membran-Elektroden-Einheit (6) Kanäle zum Zirkulieren eines Fluids zwischen jeder der beiden Platten (4, 40) und der Membran-Elektroden-Einheit (6) definieren, wobei jede Platte (4, 40) auf mindestens einer ihrer Seiten eine Dichtfläche (30, 40) für ein dichtes Anliegen an der Membran-Elektroden-Einheit (6) oder einer anderen Platte (40) aufweist, **dadurch gekennzeichnet, dass** mindestens eine Platte (4, 40) eine gerippte Dichtfläche (30, 44) aufweist.

11. Brennstoffzelle gemäß Anspruch 10, aufweisend eine Platte, die aufweist mindestens eine gerippte Dichtfläche (30) für ein dichtes Anliegen an einer Membran-Elektroden-Einheit (6) und einen Verstärkungsfilm (36) zwischen der gerippten Dichtfläche (30) und der Membran-Elektroden-Einheit (6).

12. Brennstoffzelle gemäß Anspruch 11, wobei der Verstärkungsfilm (36) zwischen der gestreiften Dichtfläche (30) und der Membran-Elektroden-Einheit (6) angeordnet oder auf der gestreiften Dichtfläche (30) und der Membran-Elektroden-Einheit (6) abgelagert ist.

13. Brennstoffzelle gemäß irgendeinem der Ansprüche 10 bis 12, aufweisend eine Trennplatte (4), die aus mindestens zwei Elementarplatten (40) gebildet ist, die durch mindestens zwei gegenüberliegende Dichtflächen (40) dicht aneinander anliegend übereinandergestapelt sind, wobei mindestens eine der Dichtflächen (40) gerippt ist.

14. Brennstoffzelle gemäß Anspruch 13, aufweisend einen Verstärkungsfilm, der zwischen den beiden Dichtflächen (40) gegenüber den beiden Elementarplatten (40) der Trennplatte (6) angeordnet ist.

## Claims

1. A plate (4 ; 40) for a fuel cell formed from a stack of plates (4 ; 40) and membrane electrode assemblies (6), **characterised in that** it comprises at least one striated sealing surface (30, 44) for bearing in a sealed manner against a membrane electrode assembly (6) or another fuel cell plate (40).

2. A plate according to claim 1, forming an elementary plate (40) designed to be stacked with another elementary plate (40) in order to form a fuel cell separator plate (4), the elementary plate (40) including at least one striated sealing surface (44) for bearing in a sealed manner against the said other elementary plate (40).

3. A plate according to claim 2, comprising a reinforcing film deposited on to the striated sealing surface (44).

4. A plate according to claim 1, forming a fuel cell separator plate (4) provided for defining with at least one membrane electrode assembly (6) the channels for the circulation of fluids between the separator plate (4) and the membrane electrode assembly (6).

5. A plate according to claim 4, comprising, on one or each face, at least one striated sealing surface (30) for bearing in a sealed manner against a membrane electrode assembly (6).

6. A plate according to claim 4 or 5, that is bipolar or monopolar.

7. A plate according to any one of claims 4 to 6, formed by two individual plates (40) that are stacked and arranged to bear in a sealed manner against one another by way of at least one pair of sealing surfaces (44) arranged face to face, each formed on a respective elementary plate (40), with at least one sealing surface (44) being striated.

8. A plate according to any one of claims 4 to 7, comprising at least one pair of sealing surfaces (44), in respect thereof the two sealing surfaces (44) are striated.

9. A plate according to either one of claims 7 and 8, comprising a reinforcing film interposed between two sealing surfaces (44) of a pair of sealing surfaces.

10. A fuel cell (2) comprising of a stack of plates (4 ; 40) and membrane electrode assemblies (6), each membrane electrode assembly (6) being arranged between two plates (4 ; 40) defining with the membrane electrode assembly (6), the channels for the circulation of a fluid between each of the two plates (4 ; 40) and the membrane electrode assembly (6), each plate (4 ; 40) comprising on at least one of the faces thereof a sealing surface (30 ; 40) for bearing in a sealed manner against the membrane electrode assembly (6) or another plate (40), **characterised in that** at least one plate (4 ; 40) comprises a striated sealing surface (30, 44).

11. A fuel cell according to claim 10, including a plate comprising at least one striated sealing surface (30) for bearing in a sealed manner against a membrane electrode assembly (6) and a reinforcing film (36) between the striated sealing surface (30) and the membrane electrode assembly (6).

12. A fuel cell according to claim 11, in which the reinforcing film (36) is interposed between the striated sealing surface (30) and the membrane electrode assembly (6) or deposited on the striated sealing surface (30) and the membrane electrode assembly (6).

13. A fuel cell according to any one of claims 10 to 12, comprising a separator plate (4) formed of at least two elementary plates (40) stacked so as to bear in a sealed manner against one another by way of at least two sealing surfaces (40) arranged to face each other, at least one of said sealing surfaces being striated (40).

14. A fuel cell according to claim 13 including a reinforcing film interposed between the two sealing surfaces (40) arranged face to face with the two individual elementary plates (40) of the separator plate (6).
